# EUROPÄISCHE PATENTSCHRIFT

(11) **EP 2 029 406 B1**
(45) Veröffentlichungstag und Bekanntmachung des Hinweises auf die Patenterteilung: **14.08.2013**
(21) Anmeldenummer: 07729939.4
(22) Anmeldetag: 06.06.2007
(51) Int. Cl.: B60T 8/36, F16K 31/06, H01F 7/18

(54) **VERFAHREN ZUM ANSTEUERN VON ANALOG ANGESTEUERTEN HYDRAULISCHEN EINLASSVENTILEN**
METHOD FOR ACTIVATING HYDRAULIC INLET VALVES WHICH ARE ACTIVATED IN AN ANALOG FASHION
PROCÉDÉ DE COMMANDE DE VANNES D'ENTRÉE HYDRAULIQUES À COMMANDE ANALOGIQUE

(30) Priorität: 06.06.2006 DE 102006026565; 09.12.2006 DE 102006058085
(43) Veröffentlichungstag der Anmeldung: 04.03.2009
(73) Patentinhaber: Continental Teves AG & Co. OHG, 60488 Frankfurt (DE)
(72) Erfinder: SCHIFFNER, Klaus, 64546 Mörfelden-Walldorf (DE); LOOS, Mirco, 66583 Elversberg (DE); ZIMMERMANN, Jochen, 56357 Oberwallmenach (DE)
(74) Vertreter: Beck, Jörg
(86) Internationale Anmeldenummer: PCT/EP2007/055564
(87) Internationale Veröffentlichungsnummer: WO 2007/141294

(56) Entgegenhaltungen:
- EP-A2- 1 014 395
- WO-A-94/10016
- WO-A-94/19810
- WO-A-96/05992
- WO-A-97/02970
- DE-A1- 3 924 510
- DE-A1- 10 104 497
- DE-A1-102004 007 955
- US-A1- 2005 117 265

## Beschreibung

Die vorliegende Erfindung betrifft ein Verfahren zum Ansteuern eines analogisierten oder analog angesteuerten hydraulischen Einlassventils eines geregelten Bremsensystems für Kraftfahrzeuge, das als stromlos offenes Ventil ausgebildet ist, wobei das Einlassventil zum Schließen bestromt wird und zum Öffnen der dem Einlassventil zugeführte Ventilstrom auf einen Zielwert reduziert wird.

In der Weiterentwicklung von Bremssystemen mit Blockierschutzregelungen ABS oder elektronischen Stabilitätsprogrammen ESP werden vermehrt analogisierte oder analog angesteuerte Ventile zur Regelung der Hydraulikflüssigkeit eingesetzt. Derartige analogisierte oder analog angesteuerte Ventile bieten den Vorteil, dass sie dosiert geöffnet oder geschlossen werden können, um einen Druckaufbau zu regeln. Beim Schaltvorgang "Öffnen" eines analogisierten stromlos offenen SO-Ventils, kann es bei einem schnellen Reduzieren des Ventilstroms zu einem Unterschwingen des Ventilstroms unter den Zielwert kommen. Durch dieses Unterschwingen des Ventilstroms unter den Zielwert wird das Ventil weiter geöffnet als es gewünscht ist. Dies führt beispielsweise zu einem größeren Druckaufbau-Gradienten. Ventil weiter geöffnet als es gewünscht ist. Dies führt beispielsweise zu einem größeren Druckaufbau-Gradienten.

Aus der DE 10 2004 007 955 A1 ist ein Verfahren zur Ansteuerung hydraulischer Ventile bekannt, bei dem eine dynamische Verzögerung bzw. eine Nacheilung des Istwertes des Druckes durch einen Vorhalt in der Eingangsgröße Strom kompensiert wird. Ein Unterschwingen des Ventilstroms wird dadurch nicht vermieden.

Die DE3924 510 A1 offenbart eine blockiergeschützte hydraulische Bremsanlage mit Magnetventilen, wobei die Magnetventile zum Schalten in schneller Folge mit Spannungspulsen versorgt werden. Zur Vermeidung von ruckartigem Schließen und Öffnen der Magnetventile werden die Spannungspulse in einem oder mehreren Zeitschritten bis zum Erreichen eines Spannungsendwerts aufgebaut bzw. abgebaut.

In der WO 97/02970 A wird eine hydraulische Bremsanlage mit elektrisch umschaltbaren Hydraulikventilen beschrieben. Zum Umschalten der Hydraulikventile von der einen in die andere Endstellung wird für die Dauer des Umschaltvorgangs ein Wechselsignal, z.B. in Form einer Pulsfolge, angelegt. Das Wechselsignal verzögert den Umschaltvorgang im Vergleich zu einem reinen Ein- bzw. Ausschalten ohne vorangehendes Wechselsignal. Nach dem Umschalten bzw. nach einer vorgegebenen Umschaltzeitdauer liegt ein Dauersignal an dem Hydraulikventil an, welches das Hydraulikventil in der entsprechenden Endstellung hält. Das Wechselsignal ist dabei ein elektrisches Spannungssignal, welches entweder mit einer bestimmten Frequenz oder mit abnehmender Amplitude an das Hydraulikventil angelegt wird.

Aus der US 2005/117265 A1 ist ein Verfahren zum Reduzieren eines Stroms durch eine Induktivität bekannt, bei welchem ein Unterschwingen des Stroms vermieden wird. Die Induktivität kann dabei beispielsweise ein Ventil eines Fahrzeugbremsensystems sein. Zur Vermeidung eines Unterschwingens wird ein erster Strom für eine erste Zeitspanne auf einem bestimmten Wert gehalten und es wird geprüft, ob eine Abbruchbedingung erfüllt ist. Eine Abbruchbedingung ist gemäß der US 2005/117265 A1 erfüllt, wenn ein gewünschter Spannungszielwert erreicht ist oder eine vorgegebene Anzahl von Stromzwischenschritten, welche jeweils für eine vorgegebene Zeitdauer gehalten werden, abgearbeitet wurde. Sofern die Abbruchbedingung nicht erfüllt ist, wird der Strom auf einen weiter reduzierten Wert heruntergefahren und wieder das Vorliegen einer Abbruchbedingung geprüft. Diese Verfahrensschritte werden solange wiederholt, bis der Stromzielwert erreicht ist.

In der WO 96/05992 A wird ein Verfahren zur Ansteuerung eines elektromagnetischen Ventils, insbesondere eines elektromagnetischen Ventils einer Bremsanlage mit Blockierschutz- bzw. Antriebsschlupfregelung offenbart. Bei Beaufschlagung mit einem ersten Stromwert nimmt das Ventil eine erste Stellung und bei Beaufschlagung mit einem zweiten Stromwert eine zweite Stellung ein. Beim Umsteuern ist das Ventil derart ansteuerbar, dass in einer ersten Phase für eine vorgebbare Zeit der Strom gemäß einer ersten Funktion von dem ersten Stromwert auf einen dritten Stromwert übergeht und in einer zweiten Phase annähernd konstant bleibt, wobei der dritte Stromwert zwischen dem ersten und dem zweiten Wert liegt.

Der Erfindung liegt daher die Aufgabe zu Grunde, ein Verfahren zum Ansteuern eines analogisierten oder analog angesteuerten hydraulischen Einlassventils zu entwickeln, das eine Ansteuerung mit erhöhter Präzision ermöglicht.

Diese Aufgabe wird durch das Verfahren gemäß Anspruch 1 gelöst. Dabei ist vorgesehen, dass beim Öffnen des Einlassventils der Ventilstrom für eine vorbestimmte Zeitdauer auf einen Wert reduziert wird, der größer ist als der Zielwert, und dass der ventilstrom nach Ablauf der vorbestimmten Zeitdauer auf den Zielwert reduziert wird.

Dabei wird der Wert, auf den der Ventilstrom zunächst reduziert wird, so gewählt wird, dass ein Unterschwingen des ventilstroms unter den Zielwert verhindert wird. Dieser Wert, auf den der Ventilstrom zunächst reduziert wird, entspricht dem Zielwert zuzüglich eines Offsetwerts von vorzugsweise 50mA.

Die vorbestimmte Zeitdauer wird erfindungsgemäß so gewählt, dass ein Unterschwingen des Ventilstroms unter den Zielwert verhindert wird. Dabei ist vorgesehen, dass die vorbestimmte Zeitdauer vorzugsweise 20 bis 30 msec beträgt.

Die Erfindung wird nachfolgend anhand eines Ausführungsbeierläutert. In der Zeichnung zeigen:
- Fig. 1: eine schematische Teildarstellung eines Bremssystems zeigt, das analog ansteuerbare Einlassventilen aufweist und an der das erfindungsgemäße Verfahren durchführbar ist;
- Fig. 2a: ein zeitliches Ablaufdiagramm einer vorbekannten Ansteuerung eines analog ansteuerbaren Einlassventils und
- Fig. 2b: ein zeitliches Ablaufdiagramm einer Ansteuerung eines analog ansteuerbaren Einlassventils nach dem erfindungsgemäßen Verfahren.

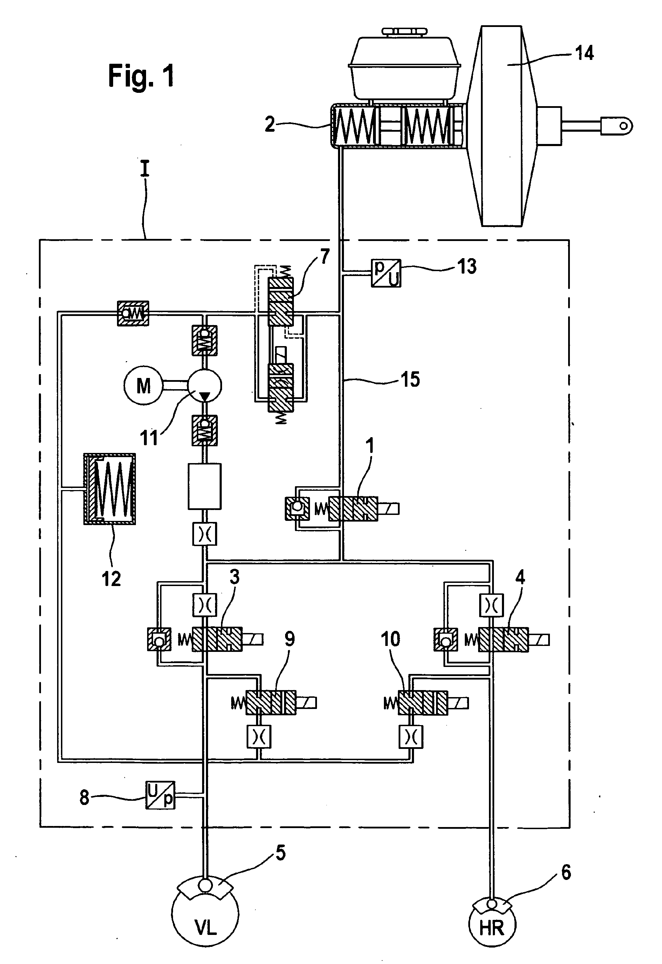

Ein Schaltplan des Fahrzeugbremssystems, an der das vorliegende Verfahren durchführbar ist, ist in Fig. 1 dargestellt. Das Fahrzeugbremssystem weist hydraulisch betätigbare Radbremsen 5, 6, -, - an allen vier Fahrzeugrädern auf, die in zwei Bremskreise I und II aufgeteilt sind. In Fig. 1 ist lediglich der erste Bremskreis I dargestellt. Der zweite Bremskreis II ist im Wesentlichen symmetrisch, weshalb zur besseren Übersichtlichkeit auf die Darstellung des zweiten Bremskreises II verzichtet wird. Bei der dargestellten Diagonal-Aufteilung ist die Radbremse 5 am Kraftfahrzeugrad vorne links (VL) und die Radbremse 6 hinten rechts (HR) am ersten Bremskreis I angeschlossen. Die hydraulisch betätigbaren Radbremsen 5, 6 werden mit Hilfe eines pedalbetätigten Druckgebers 14, der als Vakuum-Bremskraftverstärker ausgebildet ist und dem ein TandemHauptzylinder 2 nachgeschaltet ist, mit hydraulischem Druckmittel beaufschlagt. Zur Beaufschlagung der hydraulischen Radbremsen 5, 6 mit einem Druck sind die hydraulisch betätigbaren Radbremsen 5, 6 unter Zwischenschaltung von Einlassventilen 3, 4 über eine Hydraulikleitung 15 mit dem Hauptzylinder 2 verbunden. Bei einem Druckabbau wird das eingesteuerte Druckmittel über Auslassventile 9, 10 in einen Niederdruckspeicher 12 abgelassen.

Ausgehend vom pedalbetätigbaren Druckgeber 14 mit nachgeschaltetem Hauptbremszylinder 2 sind dem hydraulischen Bremskreis I stromabwärts ein Trennventil 1 und ein elektrisches Umschaltventil 7 zugeordnet. Das Trennventil 1 ist ein analog regelbar stromlos offenes SO-Ventil und wird für alle Regelungen während eines aktiven Druckaufbaus durch eine hydraulische Pumpe 11 benötigt. Das Trennventil 1 wird in diesen aktiven Druckaufbäuphasen durch die hydraulische Pumpe 11 geschlossen, damit der Druckaufbau nicht in den Hauptbremszylinder 2 eingesteuert wird. Das elektrische Umschaltventil 7 - kurz auch EUV genannt - ist ein stromlos geschlossenes SG-Ventil, das eine Verbindung zwischen dem Hauptzylinder 2 und der Saugseite der Pumpe 11 herstellt oder unterbricht. Im angesteuerten Zustand ist das elektrische Umschaltventil 7 offen und die Pumpe 11 kann Bremsflüssigkeit aus dem Hauptzylinder 2 ansaugen und beispielsweise für eine Antriebsschlupfregelung zur Verfügung stellen.

Zur Ermittlung des eingesteuerten hydraulischen Drucks ist ein Drucksensor 13 in der vom Hauptzylinder 2 ausgehenden hydraulischen Leitung 15 vorgesehen. Dieser Drucksensor ist im zweiten Bremskreis II nicht vorhanden. Jedem der beiden Bremskreise I, II ist jedoch ein weiterer Drucksensor zugeordnet. Die insgesamt vorhandenen drei Drucksensoren sind bei einer Diagonal-Aufteilung des Bremssystems, wie sie teilweise in Fig. 1 dargestellt ist, dem Tandemhauptzylinder 2, er Radbremse 5 vorne links und der nicht dargestellten Radbremse vorne rechts zugeordnet. Der Drucksensor an der Radbremse 5 vorne links ist mit dem Bezugszeichen 8 versehen.

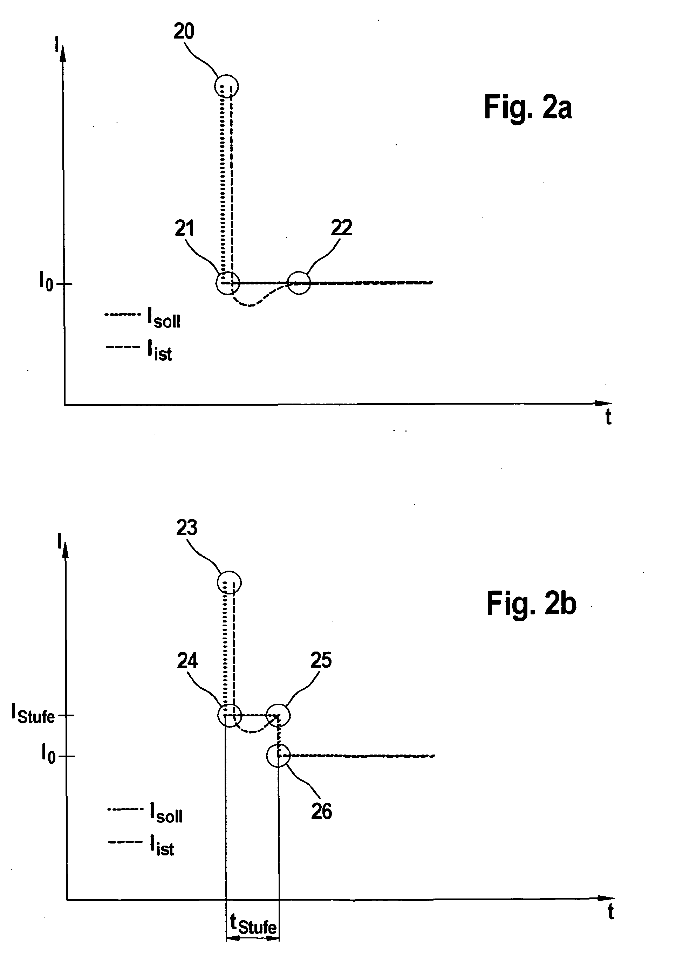

Wie eingangs bereits erwähnt, sind die Einlassventile 3, 4 als analog ansteuerbare, stromlos offene SO-Ventile ausgebildet. Mit diesen analogisierten Ventilen ist ein Druckaufbau durch die hydraulische Pumpe 11 in den Radbremsen 5, 6 dosierbar, da die analogisierten Einlassventile 3, 4 dosiert geöffnet werden können. Zum Öffnen der Einlassventile 3, 4 wird der den Einlassventilen 3, 4 zum Schließen zugeführte Ventilstrom Iᵢₛₜ auf einen Zielwert I₀ reduziert, der einer definierten Öffnung entspricht und einen definierten Volumenstrom an Druckmittel durch das Ventil fließen lässt. Beim Öffnen der analogisierten Einlassventile 3, 4 kann es bei einem schnellen Reduzieren des Ventilstroms Iᵢₛₜ zu einem Unterschwingen des Ventilstroms Iᵢₛₜ unter diesen Zielwert I₀ kommen, wie es anhand von Fig. 2a näher erläutert wird. Die Sollvorgabe Iₛₒₗₗ ist als gepunktete Linie dargestellt, während der tatsächliche Stromverlauf Iᵢₛₜ des Ventilstroms strichpunktiert dargestellt ist. Wenn die Einlassventile 3, 4 schnell geöffnet werden sollen, um einen definierten Volumenstrom an Druckmittel durchfließen zu lassen, soll der Ventilstrom Iᵢₛₜ schnell reduziert werden, wie es bei Position 20 dargestellt ist. Die Sollvorgabe Iₛₒₗₗ strebt den Zielwert I₀ an. Der Istwert Iᵢₛₜ kann dieser nahezu rechteckigen Stromvorgabe Iₛₒₗₗ nicht folgen und schwingt unter den Zielwert I₀, wie es bei Position 21 dargestellt ist. Erst nach dem Unterschwingen der Sollvorgabe Iₛₒₗₗ nimmt der Istwert Iᵢₛₜ den Zielwert I₀ an (Position 22). Durch dieses Unterschwingen des Ventilstroms Iᵢₛₜ unter den Zielwert I₀ werden die Einlassventile 3, 4 weiter geöffnet als es gewünscht ist. Dies führt zu einem größeren Druckaufbau-Gradienten, da der Durchfluss eines größeren Volumenstroms möglich ist.

Um dieses Verhalten zu vermeiden, wird das vorliegende Verfahren vorgeschlagen, das anhand von Fig. 2b näher erläutert wird. Dabei ist vorgesehen, dass beim Öffnen der Einlassventile 3, 4 der Ventilstrom Iᵢₛₜ für eine vorbestimmte Zeitdauer t_{Stufe} auf einen Wert I_{Stufe} reduziert wird, der größer ist als der Zielwert I₀ und dass der Ventilstrom Iᵢₛₜ erst danach, das heißt nach Ablauf der vorbestimmten Zeitdauer t_{Stufe} auf den Zielwert I₀ reduziert wird.

Wie es bei Position 23 dargstellt ist, werden Sollvorgabe Iₛₒₗₗ und tatsächlicher Ventilstrom Iᵢₛₜ schnell reduziert. Anstatt die Sollvorgabe Iₛₒₗₗ sofort auf den Zielwert I₀ zu reduzieren, wird die Sollvorgabe zunächst auf einen Wert I_{Stufe} reduziert, der größer als der Zielwert I₀ ist. Dies ist bei Position 24 dargestellt. Das Unterschwingen den Istwertes Iᵢₛₜ hat keine negative Auswirkung auf das Öffnen der Einlassventile 3, 4, da der Wert I_{Stufe} so gewählt wird, dass das Unterschwingen des Ventilstroms Iᵢₛₜ unter den Zielwert I₀ verhindert wird und deshalb die Einlassventile 3, 4 nicht weiter geöffnet werden, als es gewünscht ist. Die Sollvorgabe Iₛₒₗₗ verharrt so lange auf dem Wert I_{Stufe} bis das Unterschwingen des Ventilstroms Iᵢₛₜ beendet ist (Position 25). Anschließend wird die Sollvorgabe Iₛₒₗₗ auf den Zielwert Iₒ reduziert und der Ventilstrom Iᵢₛₜ folgt der Sollvorgabe Iₛₒₗₗ nahezu deckungsgleich auf den Zielwert *I₀, wie es bei Position 26 dargestellt ist.

Wie bereits erwähnt, wird der Wert I_{Stufe} so gewählt, dass ein Unterschwingen des Ventilstroms Iᵢₛₜ unter den Zielwert I₀ vermieden wird. Der Wert I_{Stufe} wird daher aus der Summe von Zielwert I₀ und einem Offsetwert bestimmt. Der Offsetwert entspricht daher der Höhe des Unterschwingens und beträgt im beschriebenen Ausführungsbeispiel 50mA.

Gleiches gilt im Prinzip auch für die Zeitdauer t_{Stufe}, die ebenfalls so gewählt wird, dass ein Unterschwingen des Ventilstroms Iᵢₛₜ unter den Zielwert I₀ verhindert wird. Die Zeitdauer t_{Stufe} entspricht daher der Länge des Unterschwingens und beträgt in diesem Ausführungsbeispiel 20 bis 30 msec.

Das vorliegende Verfahren bietet die Möglichkeit, die maximal ausgeschöpften, hardwareelektronischen Möglichkeiten des Stromreglers per Softwarebeeinflussung zu verbessern.

Die genauere Einstellung des gewünschten Ventilstromes Iᵢₛₜ hat den Vorteil, dass auch der Istwert eines zu modulierenden hydraulischen Drucks in der Radbremse 5, 6 präziser einem berechneten Modelldruck folgt. Dies ist auch dann sehr wichtig, wenn ein Bremssystem - anders als anhand von Fig. 1 beschrieben - lediglich einen Drucksensor aufweist, der den vom Hauptzylinder ausgehenden hydraulischen Druck sensiert. In diesem Fall wird für den hydraulischen Druckaufbau in den Radbremsen ein Modelldruck berechnet. Der in die Radbremsen eingesteuerte hydraulische Druck entspricht besser dem Modelldruck, da die Einlassventile mit Hilfe des vorliegenden Verfahrens präziser angesteuert werden können.

Ebenfalls werden durch die genauere Stromansteuerung Geräuscheffekte des Ventils, wie zum Beispiel ein Schwingen in Eigenresonanz, besser unterdrückt.

### Bezugszeichenliste

- 1: Trennventil
- 2: Tandemhauptzylinder
- 3: Einlassventil VL
- 4: Einlassventil HR
- 5: Radbremse VL
- 6: Radbremse HR
- 7: elektrisches Umschaltventil
- 8: Drucksensor
- 9: Auslassventil FL
- 10: Auslassventil FR
- 11: hydraulische Pumpe
- 12: Niederdruckspeicher
- 13: Drucksensor
- 14: pedalbetätigbarer Bremsdruckgeber
- 15: hydraulische Leitung

## Patentansprüche

1. Verfahren zum Ansteuern eines analogisierten oder analog angesteuerten hydraulischen Einlassventils (3, 4) eines geregelten Bremsensystems für Kraftfahrzeuge, das als stromlos offenes Ventil ausgebildet ist, wobei das Einlassventil (3, 4) zum Schließen bestromt wird und zum Öffnen der dem Einlassventil (3, 4) zugeführte Ventilstrom (Iᵢₛₜ) auf einen Zielwert (I₀) reduziert wird, beim Öffnen des Einlassventils (3, 4) der Ventilstrom (Iᵢₛₜ) für eine vorbestimmte Zeitdauer (t_{Stufe}) auf einen Wert (I_{Stufe}) reduziert wird, der größer ist als der Zielwert (I₀), und dass der Ventilstrom (Iᵢₛₜ) nach Ablauf der vorbestimmten Zeitdauer (t_{Stufe}) auf den Zielwert (I₀) reduziert wird, wobei die vorbestimmte Zeitdauer (t_{Stufe}) und der Wert (I_{Stufe}), auf den der Ventilstrom (Iᵢₛₜ) zunächst reduziert wird, so gewählt werden, dass ein Unterschwingen des Ventilstroms (Iᵢₛₜ) unter den Zielwert (I₀) verhindert wird, **dadurch gekennzeichnet, dass** eine Sollvorgabe (Iₛₒₗₗ) für den Ventilstrom so lange auf dem Wert (I_{Stufe}), auf den der Ventilstrom (Iᵢₛₜ) zunächst reduziert wird, verharrt, bis ein Unterschwingen des Ventilstroms (Iᵢₛₜ) unter den Wert (I_{Stufe}), auf den der Ventilstrom (Iᵢₛₜ) zunächst reduziert wird, beendet ist.

2. Verfahren nach Anspruch 1, **dadurch gekennzeichnet, dass** der Wert (I_{Stufe}), auf den der Ventilstrom (Iᵢₛₜ) zunächst reduziert wird, dem Zielwert (I₀) zuzüglich eines Offsetwerts entspricht.

## Claims

1. Method for actuating a hydraulic inlet valve (3, 4), analyzed or activated in an analog fashion, of a controlled brake system for motor vehicles, which inlet valve (3, 4) is embodied as a valve which is open in the currentless state, wherein the inlet valve (3, 4) is energized for the purpose of closing, and for the purpose of opening, the valve current (I_{act}) which is fed to the inlet valve (3, 4) is reduced to a target value (I₀), when the inlet valve (3, 4) opens the valve current (I_{act}) is reduced for a predetermined time period (t_{stage}) to a value (I_{stage}) which is longer than the target value (I₀), and wherein the valve current (I_{act}) is reduced to the target value (I₀) after the expiry of the predetermined time period (t_{stage}) wherein the predetermined time period (t_{stage}) and the value (I_{stage}) to which the valve current (I_{act}) is initially reduced are selected in such a way that oscillation of the valve current (I_{act}) below the target value (I₀) is prevented, **characterized in that** a setpoint predefined value (Iₛₑₜₚ) for the valve current remains at the value (I_{stage}) to which the valve current (I_{act}) is initially reduced, until oscillation of the valve current (I_{act}) below the value (I_{stage}) to which the valve current (I_{act}) is initially reduced is ended.

2. Method according to Claim 1, **characterized in that** the value (I_{stage}) to which the valve current (I_{act}) is initially reduced corresponds to the target value (I₀) plus an offset value.

## Revendications

1. Procédé de pilotage d'une soupape d'admission (3,4) hydraulique analogisée ou pilotée analogiquement d'un système de freinage régulé pour véhicules automobiles, qui est conçu comme une soupape ouverte sans courant, dans lequel la soupape d'admission (3,4) est alimentée en courant en vue de sa fermeture et en vue de son ouverture le courant de soupape (Iᵢₛₜ) alimenté dans la soupape d'admission (3,4) est réduit à une valeur cible (I₀), lors de l'ouverture de la soupape d'admission (3,4) le courant de soupape (Iᵢₛₜ) est réduit pendant une période prédéterminée (t_{Stufe}) à une valeur (I_{Stufe}), qui est plus grande que la valeur cible (I₀), et dans lequel le courant de soupape (Iᵢₛₜ) est réduit après l'écoulement de la période prédéterminée (t_{Stufe}) à la valeur cible (I₀) , dans lequel la période prédéterminée (t_{Stufe}) et la valeur (I_{Stufe}), à laquelle le courant de soupape (Iᵢₛₜ) est d'abord réduit, sont sélectionnées de telle sorte qu'une sous-oscillation du courant de soupape (Iᵢₛₜ) au-dessous de la valeur cible (I₀) soit empêchée, **caractérisé en ce qu'**une prescription de consigne (Iₛₒₗₗ) pour le courant de soupape se maintient sur la valeur (I_{Stufe}), à laquelle le courant de soupape (Iᵢₛₜ) est d'abord réduit, assez longtemps pour qu'une sous-oscillation du courant de soupape (Iᵢₛₜ) au-dessous de la valeur (I_{Stufe}), à laquelle le courant de soupape (Iᵢₛₜ) est d'abord réduit, prenne fin.

2. Procédé selon la revendication 1, **caractérisé en ce que** la valeur (I_{Stufe}), à laquelle le courant de soupape (Iᵢₛₜ) est d'abord réduit, correspond à la valeur cible (I₀) majorée d'une valeur de décalage.
